# EUROPÄISCHE PATENTSCHRIFT

(11) **EP 3 550 309 B1**
(45) Veröffentlichungstag und Bekanntmachung des Hinweises auf die Patenterteilung: **04.10.2023**
(21) Anmeldenummer: 18166132.3
(22) Anmeldetag: 06.04.2018
(51) Int. Cl.: G01N 35/10, B25J 15/00, B25J 15/02, B25J 15/04, B25J 15/06

(54) **KOMBINATION PIPETTENSPITZEN-AUFNAHME UND GREIFER**
COMBINED PIPETTE TIP HOLDER AND GRIPPER
SYSTÈME COMBINÉ DE SUPPORT DE PIPETTE ET GRIPPER

(43) Veröffentlichungstag der Anmeldung: 09.10.2019
(73) Patentinhaber: TECAN TRADING AG, 8708 Männedorf (CH)
(72) Erfinder: CORS, Nicolas, 8640 Rapperswil (CH); NÜESCH, Basil, 8707 Uetikon am See (CH)
(74) Vertreter: Troesch Scheidegger Werner AG

(56) Entgegenhaltungen:
- EP-A1- 2 913 677
- WO-A1-2017/098331
- DE-U1-202013 102 432
- US-A1- 2001 034 067
- US-A1- 2013 019 697
- US-B1- 8 007 741

## Beschreibung

### TECHNISCHES GEBIET

Die vorliegende Erfindung betrifft ein Pipettier-System, insbesondere mit Greifer für Mikroplatten, Deep-Well-Platten, Probenröhrchen und andere Laborartikel.

### STAND DER TECHNIK

Es sind Pipettier-Systeme bekannt, bei welchen anstelle von Wegwerf-Pipettenspitzen, Greifer oder andere Werkzeuge mit Pipettenspitzen-Aufnahmen aufgenommen werden können. Normalerweise werden Wegwerf-Spitzen, sogenannten Disposable Tips (DiTi), mit Pipettenspitzen-Aufnahmen solcher Systeme aufgenommen und nach dem Pipettieren wieder abgeworfen. Es kann nur eine Wegwerf-Spitze oder ein Greifer an der Pipettenspitzen-Aufnahme befestigt sein. Da die Verwendung von Wegwerf-Spitzen im laufenden Betrieb teuer ist und zusätzlich Kosten für deren Entsorgung anfallen, werden häufig fix montierte Pipetten-Spitzen aus Stahl verwendet. Ein Pipettier-System mit fix montierte Pipetten-Spitzen ist jedoch nicht in der Lage, herkömmliche Greifer oder andere Werkzeuge mit Pipettenspitzen-Aufnahmen aufzunehmen.

US 8 007 741 offenbart ein Pipettier-System mit Pipettenspitzen-Aufnahmen, welche an einer unteren Platte angebracht sind und in welchen Pipettenspitzen angeordnet werden können. Weiter offenbart einen schwebenden Greiferschlitten, welcher auf einer Schiene vertikal verfahrbar ist. Greiferfinger sind schwenkbar am Greiferschlitten angeordnet. Die Greiferfinger sind seitlich versetzt zu den Pipettenspitzen-Aufnahmen angeordnet.

DE 20 2013 102432 offenbart eine Pipettenspitzen-Aufnahme an welcher ein Block zum Halten von identisch ausgebildeten Pipettenspitzen angeschlossen ist, welcher sich entlang einer Spitzenachse erstreckt. Beispielsweise offenbart die EP 2 913 677 ein Pipettier-System, bei welchem wahlweise eine Pipettenspitze oder ein Greifer an einer Pipettenspitzen-Aufnahme angeordnet werden können. Die gleichzeitige Anordnung von Pipettenspitze und Greifer an der Pipettenspitzen-Aufnahme ist jedoch nicht möglich.

### BESCHREIBUNG DER ERFINDUNG

Eine Aufgabe der vorliegenden Erfindung besteht darin, ein Pipettier-System bereitzustellen, bei welchem ein Greifer zusammen mit einer eingesetzten Pipettenspitze verwendet werden kann.

Diese Aufgabe wird durch ein Pipettier-System mit den Merkmalen des Anspruchs 1 gelöst. Weitere Ausführungsformen des Pipettier-Systems sind durch die Merkmale von weiteren Ansprüchen definiert.

Ein erfindungsgemässes Pipettier-System umfasst mindestens eine Pipettenspitzen-Aufnahme mit einer darin angeordneten Pipettenspitze, welche sich entlang einer Vertikalachse erstreckt, mindestens einen Greifer, welcher eine mechanische Kupplung umfasst, welche sich entlang der Vertikalachse erstreckt, wobei der Greifer mit der Kupplung an die mindestens eine Pipettenspitzen-Aufnahme angeschlossen ist, und mindestens ein Greifelement, welches sich von der Kupplung aus entlang der Vertikalachse erstreckt, wobei das mindestens eine Greifelement mindestens einen im Wesentlichen vertikalen Abschnitt umfasst, wobei die Kupplung einen Körper mit einem Durchgangskanal umfasst, welcher sich entlang der Vertikalachse über die gesamte Länge der Kupplung erstreckt und wobei sich die Pipettenspitze zumindest teilweise entlang des Durchgangskanals der Kupplung erstreckt. Eine solche Ausgestaltung hat den Vorteil, dass die Pipettenspitze nicht entfernt werden muss, um den Greifer montieren zu können. Dementsprechend müssen keine Wegwerfspitzen verwendet und entsorgt werden, wodurch sich die Kosten reduzieren. Zudem werden keine zusätzlichen Halter für Pipettenspitzen benötigt, wodurch der Platz, den die Halter benötigen würden, anderweitig nutzbar ist.

Erfindungsgemäß ist das Greifelement seitlich am Körper der Kupplung angeordnet. Dies erlaubt eine einfache und kostengünstige Montage.

In einer Ausführungsform ist am oberen freien Ende der Kupplung eine erste Kraftscheibe zwischen dem Körper und einem axialen Führungsring klemmbar angeordnet, wobei die innere Kontur der ersten Kraftscheibe im geklemmten Zustand in das Innere der Kontur des Durchgangskanals ragt. Durch die Kraftscheibe ist gleichzeitig eine Zentrierung und eine Klemmung realisierbar.

In einer Ausführungsform umfasst die Pipettenspitzen-Aufnahme einen Adapter mit einem Durchgangskanal, welcher sich entlang der Vertikalachse über die gesamte Länge des Adapters erstreckt, wobei sich die Pipettenspitze zumindest teilweise entlang des Durchgangskanals des Adapters erstreckt. Der Adapter stellt sicher, dass die Pipettenspitze exakt und sicher positioniert und fixiert ist und ermöglicht eine exakte und sichere Positionierung und Fixierung des Greifers an der Pipettenspitzen-Aufnahme. In einer Ausführungsform erstreckt sich die Pipettenspitze durch den Durchgangskanal des Adapters hindurch und über den Adapter hinaus. Der Adapter kann kürzer, gleichlang oder länger als die Kupplung des Greifers ausgebildet sein. In einer Ausführungsform umfasst der Durchgangskanal des Adapters einen ersten Abschnitt mit einem Gewinde mit einem ersten Durchmesser, wobei sich der erste Abschnitt von einer oberen Stirnseite des Adapters aus entlang der Vertikalachse nach unten erstreckt. Der Adapter umfasst einen an den ersten Abschnitt anschliessenden zweiten Abschnitt mit einem zweiten Durchmesser, wobei der zweite Durchmesser kleiner als der erste Durchmesser ausgebildet ist. Der Adapter umfasst einen an den zweiten Abschnitt anschliessenden dritten Abschnitt mit einem dritten Durchmesser, wobei der dritte Durchmesser kleiner als der zweite Durchmesser ist, wodurch sich ein umlaufender Absatz ergibt, an welchem die Pipettenspitze angeordnet ist. Die Pipettenspitze umfasst einen umlaufenden Kragen, welcher am umlaufenden Absatz anschlägt. Der Kragen der Pipettenspitze wird zwischen dem umlaufenden Absatz und einem Pipettierrohr einer Z-Achse eines Manipulators geklemmt.

In eine Ausführungsform ist am oberen freien Ende des Adapters auf der Aussenseite ein Mitnahmeprofil ausgebildet. Das Mitnehmerprofil kann eine oder mehrere Ausnehmungen am Umfang des Adapters umfassen. Beispielsweise kann es gerippt ausgebildet sein, sodass der Adapter leicht von Hand am Pipettierrohr festgeschraubt werden kann. Alternativ kann das Mitnahmeprofil eine oder mehrere Ausnehmungen für das Eingreifen mit einem Werkzeug umfassen, beispielsweise mit einem Schlüssel.

In einer Ausführungsform umfasst der Adapter einen Schaft mit einem zylindrischen ersten Abschnitt, einem konischen zweiten Abschnitt und einem zylindrischen dritten Abschnitt. Der Durchgangskanal der Kupplung umfasst entsprechende Abschnitte, welche zu den jeweiligen Abschnitten des Adapters im Wesentlichen kongruent sind, bzw. welche formgleiche Gegenstücke zu den jeweiligen Abschnitten des Adapters bilden.

In einer Ausführungsform ist im ersten Abschnitt des Adapters eine umlaufende erste Erhöhung vorgesehen, deren äussere Kontur nach aussen über die Kontur des ersten Abschnitts ragt, wobei die äussere Kontur der ersten Erhöhung innerhalb der Kontur des Durchgangskanals der Kupplung liegt. Die umlaufende Erhöhung bewirkt eine erhöhte Haltekraft zusammen mit der ersten Kraftscheibe und zentriert den Adapter im Durchgangskanal der Kupplung.

In einer Ausführungsform ist im ersten Abschnitt des Adapters eine sich radial nach aussen erstreckende zweite Erhöhung vorgesehen, wobei am oberen freien Ende der Kupplung mindestens eine zweite Ausnehmung vorgesehen ist, welche sich vom Durchgangskanal radial nach aussen erstreckt und wobei die zweite Erhöhung des Adapters in der zweiten Ausnehmung der Kupplung aufnehmbar ist, wodurch eine relative Verdrehung des Greifers bezüglich des Adapters verhinderbar ist. Beispielsweise können mehrere Erhöhungen vorgesehen sein, welche in entsprechende Ausnehmungen eingreifen können. Die Erhöhungen am Adapter und die entsprechenden Ausnehmungen an der Kupplung können nach unten, entlang der Vertikalachse konisch zusammenlaufend ausgebildet sein, um das Einfahren und das Ausrichten zu erleichtern.

In einer Ausführungsform ist im Durchgangskanal des Adapters, im Bereich des unteren freien Endes des Adapters, eine erste Dichtung vorgesehen, welche einen direkten Kontakt der Pipettenspitze mit dem Durchgangskanal des Adapters verhindert. In einer Ausführungsform ist im dritten Abschnitt des Adapters an seiner Aussenseite eine ringförmige zweite Dichtung angeordnet, deren äussere Kontur über die äussere Kontur des dritten Abschnitts des Adapters ragt. In einer Ausführungsform ist im ersten Abschnitt des Adapters, an seiner Aussenseite eine dritte Dichtung angeordnet, deren äussere Kontur über die äussere Kontur des ersten Abschnitts des Adapters ragt. Beispielsweise sind die erste, die zweite und die dritte Dichtung O-Ringe, welche eine nachgiebige und dichtende Zentrierung der Pipettenspitze im Adapter sicherstellen.

In einer Ausführungsform ist im ersten Abschnitt des Adapters auf seiner Aussenseite eine umlaufende Nut vorgesehen. In einem ersten Abschnitt des Durchgangskanals ist eine umlaufende vierte Nut vorgesehen. Ein ringförmiges, elastisches Kupplungselement ist vorgesehen, welches in beide Nuten eingreift. Beispielsweise ist das Kupplungselement eine torusförmige Feder. Das Kupplungselement kann eine Dichtung umfassen, beispielsweise in der Form einer zumindest teilweisen Kunststoffummantelung. Das Kupplungselement kann auch vollständig von Kunststoff umgeben sein. Alternativ kann das Kupplungselement ein Spannring oder eine Spannhülse sein.

In einer Ausführungsform ist in der Kupplung mindestens eine radiale Bohrung vorgesehen, welche sich von der vierten Nut radial nach aussen erstreckt und in welcher ein Drücker angeordnet ist, mit welchem eine radial nach innen gerichtete Kraft auf das Kupplungselement ausübbar ist. Mit mehreren Drückern kann eine am Umfang gleichmässiger verteilt äussere Krafteinwirkung auf das Kupplungselement erzeugt werden. Zudem erhöht sich die Gesamtkraft. Somit kann eine präzise Einstellung der Kraft vorgenommen werden, welche für die Anordnung des Greifers am Pipettier-Rohr erforderlich ist.

In einer Ausführungsform ist im dritten Abschnitt des Durchgangskanals eine umlaufende zweite Nut vorgesehen, in welcher eine ringförmige zweite Dichtung angeordnet ist, deren innere Kontur in das Innere der Kontur des dritten Abschnitts des Durchgangskanals ragt. Beispielsweise ist ein O-Ring oder eine Lippendichtung vorgesehen. Die zweite Dichtung zentriert und dichtet ebenfalls.

In einer Ausführungsform ist im ersten Abschnitt des Durchgangskanals eine umlaufende dritte Nut vorgesehen, in welcher eine ringförmige dritte Dichtung oder in welcher eine ringförmige dritte Dichtung und eine zweite Kraftscheibe angeordnet sind, wobei die innere Kontur der dritten Dichtung in das Innere der Kontur des ersten Abschnitts des Durchgangskanals ragt. Die dritte Dichtung kann ebenfalls ein O-Ring oder eine Lippendichtung sein. Die zweite Kraftscheibe kann aus Kunststoff oder aus Metall gefertigt sein. Mit der Kraftscheibe kann eine radial nach innen gerichtete Kraft auf die dritte Dichtung ausgeübt werden. Diese Bauweise reduziert das Steifigkeitsverhalten der dritten Dichtung bei einer Kraftbeaufschlagung auf die Innenseite der dritten Dichtung, da die Kraftscheibe nachgiebiger ist im Vergleich zum Greifermaterial im Bereich der Kupplung.

In einer Ausführungsform umfasst der Körper der Kupplung eine Haltevorrichtung mit einer seitlich des Durchgangskanals angeordneten Ausnehmung. Mit der Haltervorrichtung kann die Kupplung an einem dafür vorgesehenen Halter angeordnet werden. Beispielsweise können mehrere Greifer an einem Halter angeordnet werden. Die Ausnehmung bildet eine formschlüssige Verbindung mit dem Halter. Die Ausnehmung kann Positionsbohrungen umfassen, wobei diese regelmässig verteilt über die Ausnehmung angeordnet sein können. Beispielsweise können vier Positionsbohrungen in einem Rechteck angeordnet sein.

In einer Ausführungsform umfasst der Körper der Kupplung Magnetbohrungen, welche sich im Wesentlichen senkrecht zur Ausnehmung erstrecken und in welchen Magnete beabstandet zur Ausnehmung angeordnet sind. Beispielsweise sind die Magnetbohrungen auf der gegenüberliegenden Seite der Haltevorrichtung angeordnet und enden beabstandet zur Ausnehmung der Haltevorrichtung. Die Magnete können zylindrische Permanentmagnete sein, welche in die Magnetbohrungen eingelassen sind. Der Halter kann ein magnetisches Element umfassen, wodurch zusammen mit den Magneten der Kupplung eine zusätzliche Haltekraft resultiert.

In einer Ausführungsform umfasst das mindestens eine Greifelement mindestens einen im Wesentlichen horizontalen Abschnitt. Dieser Abschnitt kann einteilig oder mehrteilig ausgebildet sein. Beispielsweise kann der mindestens eine horizontale Abschnitt eine, zwei oder mehr horizontale Laschen umfassen, welche einstückig mit dem vertikalen Abschnitt ausgebildet sind oder welche an diesem angeordnet sind.

In einer Ausführungsform erstreckt sich der im Wesentlichen horizontale Abschnitt des Greifelements von der Pipettenspitze weg. Durch diese Anordnung ist die Pipettenspitze durch mindestens einen vertikalen Abschnitt von dem zu greifenden Laborartikel getrennt und dementsprechend geschützt. Alternativ kann der horizontale Abschnitt gegen die Pipettenspitze gerichtet sein.

In einer Ausführungsform umfasst das mindestens eine Greifelement mindestens einen weiteren im Wesentlichen vertikalen Abschnitt.

In einer Ausführungsform ist ein Dämpfungselement am vertikalen Abschnitt oder am weiteren vertikalen Abschnitt angeordnet. Das Dämpfungselement kann beispielsweise ein Gummi- oder Schaumstoffelement sein; beispielsweise in Matten- oder Plattenform. Das Dämpfungselement dämpft nicht nur, es erhöht auch die Haftung des Greifelements.

In einer Ausführungsform umfasst das mindestens eine Greifelement weitere Abschnitte, welche zwischen dem vertikalen Abschnitt und dem horizontalen Abschnitt oder welche zwischen dem vertikalen Abschnitt und dem weiteren vertikalen Abschnitt angeordnet sind. Die weiteren Abschnitte können horizontal, vertikal, winklig oder gekrümmt ausgebildet sein. Winklige Abschnitte sind schräg ausgerichtet, d.h. unter einem Winkel der weder horizontal noch vertikal ist.

In einer Ausführungsform umfasst mindestens einer der weiteren Abschnitte eine Durchgangsöffnung, welche in der Verlängerung des Durchgangskanals angeordnet ist. Die Durchgangsöffnung ist in der Verlängerung des Durchgangskanals der Kupplung und des Adapters angeordnet. Die eingesetzte Pipettenspitze kann ungehindert in die Durchgangsöffnung eingeführt werden.

In einer Ausführungsform umfassen zwei, mehr oder alle Abschnitte eine separate Durchgangsöffnung oder wobei zwei, mehr oder alle Abschnitte umfassen eine gemeinsame Durchgangsöffnung.

In einer Ausführungsform umfasst das Pipettier-System weiter einen Manipulator, mit welchem die mindestens eine Pipettenspitzen-Aufnahme entlang einer ersten Horizontalachse, entlang einer zur ersten Horizontalachse senkrechten zweiten Horizontalachse und entlang einer zu den beiden Horizontalachsen senkrechten Vertikalachse verfahrbar ist.

In einer Ausführungsform umfasst das Pipettier-System weiter mindestens einen Halter für mindestens einen Greifer. Der mindestens eine Halter ist auf einem Arbeitstisch des Systems anordbar. Es können mehrere Halter auf dem Arbeitstisch nebeneinander angeordnet werden. Die Halter können aus einem magnetischen oder magnetisierbaren Material gefertigt sein oder können ein solches umfassen.

Die erwähnten Ausführungsformen des Pipettier-Systems lassen sich in beliebiger Kombination einsetzen, sofern sie sich nicht widersprechen.

Ein erfindungsgemässes Verfahren zur Verwendung eines Greifers in einem Pipettier-System gemäss einem der vorangehenden Ausführungsformen umfasst die Schritte:
- Bereitstellen mindestens einer Pipettenspitzen-Aufnahme mit einer darin angeordneten Pipettenspitze;
- Bereitstellen mindestens eines Greifers mit einem Durchgangskanal;
- Anordnen der Pipettenspitzen-Aufnahme über dem Greifer;
- Absenken der Pipettenspitzen-Aufnahme, wodurch die Pipettenspitze in den Durchgangskanal eingeführt wird; und
- Herstellen einer Verbindung zwischen der Pipettenspitzen-Aufnahme und dem Greifer.

### KURZE BESCHREIBUNG DER FIGUREN

Ausführungsbeispiele der vorliegenden Erfindung werden nachstehend anhand von Figuren noch näher erläutert. Diese dienen lediglich zur Erläuterung und sind nicht einschränkend auszulegen. Es zeigen
Fig. 1 eine perspektivische Teilansicht eines erfindungsgemässen Pipettier-Systems;
Fig. 2 perspektivische Ansichten einer Ausführungsform eines erfindungsgemässen Greifers;
Fig. 3 eine Schnittansicht einer weiteren Ausführungsform eines erfindungsgemässen Greifers;
Fig. 4 eine Schnittansicht einer weiteren Ausführungsform eines erfindungsgemässen Greifers;
Fig. 5 eine perspektivische Ansicht einer weiteren Ausführungsform eines erfindungsgemässen Greifers;
Fig. 6 perspektivische Ansichten von weiteren Ausführungsform von erfindungsgemässen Greifelementen;
Fig. 7 eine schematische Teilschnittansicht durch eine Ausführungsform eines Adapters und einer Kupplung;
Fig. 8 eine schematische Teilschnittansicht durch eine weitere Ausführungsform eines Adapters und einer Kupplung; und
Fig. 9 eine Seitenansicht eines erfindungsgemässen Pipettier-Systems mit zwei Greifern, welche an zwei sich gegenüberliegenden Seiten einer Deep-Well-Platte angeordnet sind.

### DETAILLIERTE BESCHREIBUNG DER ERFINDUNG

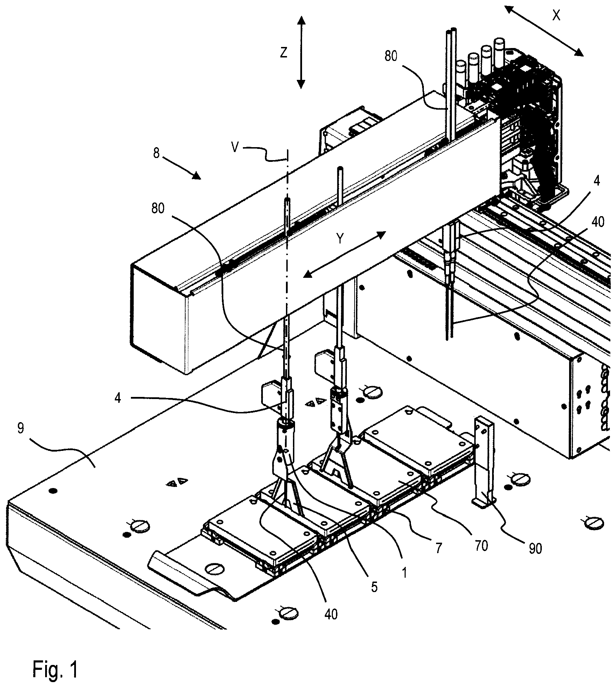

Die Figur 1 zeigt eine perspektivische Teilansicht eines erfindungsgemässen Pipettier-Systems. Das dargestellte Pipettier-System umfasst vier Pipettenspitzen-Aufnahmen 4, wobei in zwei der Aufnahmen 4 jeweils eine Pipettenspitze 40 angeordnet ist und wobei in zwei der Aufnahmen 4 jeweils eine Pipettenspitze 40 und ein Greifer 1;5 angeordnet ist. Die Pipettenspitzen-Aufnahmen 4 sind an einem Manipulator 8 angeordnet, mit welchem sie gemeinsam entlang einer ersten Horizontalachse X verschiebbar sind und getrennt voneinander entlang einer zweiten Horizontalachse Y und entlang einer Vertikalachse Z verschiebbar sind. Der Manipulator 8 ist derart ausgestaltet, dass die Pipettenspitzen-Aufnahmen 4 über einem Arbeitstisch 9 verfahrbar sind. Auf dem Arbeitstisch 9 sind Plattenhalterungen 7 für Mikroplatten 70 angeordnet. Ein Halter 90 zur Aufnahme von zwei Greifern ist ebenfalls auf dem Arbeitstisch 9 angeordnet. Wenn sich die Greifer in im Greifer-Halter befinden, so kann jeweils eine Pipettenspitzen-Aufnahme 4 senkrecht über die Kupplung 1 des entsprechenden Greifers verfahren werden. Wird die Pipettenspitzen-Aufnahme 4 in die Kupplung 1 eingeführt, wird diese seitlich geklemmt und es entsteht eine kraftschlüssige Verbindung. Alternativ kann eine formschlüssige Verbindung realisiert werden. Das Einführen kann ohne die Entfernung der Pipettenspitze 40 erfolgen. Durch eine Verschiebung der Pipettenspitzen-Aufnahme 4 entlang der Y-Achse kann die Kupplung 1 von den seitlich angeordneten Stiften 90 des Halters 90 ausgefahren werden. Zwei Greifer zusammen können eine Mikroplatte 70 aus der Plattenhalterung 7 entfernen und anderswo präzise platzieren. Werden die Greifer nicht mehr benötigt, so können sie wieder im Halter 90 angeordnet werden. Um ein ungewolltes seitliches abrutschen der Greifer vom Greifer-Halter 90 zu vermeiden, sind beide magnetisch oder magnetisierbar und mindestens eines der beiden Elemente umfasst einen Permanentmagneten. In den dargestellten Ausführungsformen sind gleiche Elemente mit gleichen Bezugszeichen versehen.

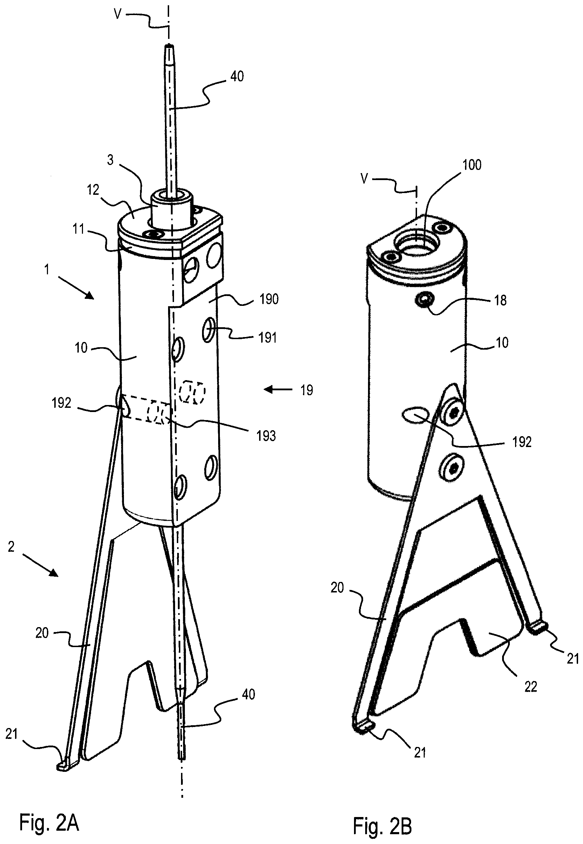

Die Figur 2 zeigt perspektivische Ansichten einer Ausführungsform eines erfindungsgemässen Greifers, wobei die Figur 2A den Greifer mit einer Kupplung 1 und einem ersten Greifelement 2 zeigt, wobei die Kupplung 1 an einem Adapter 3 mit einer darin eingesetzten Pipettenspitze 40 angeordnet ist. Die Figur 2B zeigt die gleiche Ausführungsform des Greifers von einer der ersten Seite gegenüberliegenden Seite, jedoch ohne Adapter und Pipettenspitze. In der Figur 2A ist erkennbar, dass die Pipettenspitze 40 durch den gesamten Adapter 3, die gesamte Kupplung 1 und über eine untere Stirnfläche der Kupplung 1 hinausragt. Seitlich an einem Körper 10 der Kupplung 1 ist ein erstes Greifelement 2 befestigt. Konkret ist das erste Greifelement 2 mittels Schrauben am Körper 10 festgeschraubt. Das erste Greifelement 2 umfasst einen vertikalen Abschnitt 20 und einen horizontalen Abschnitt 21. Das Greifelement 2 ist mit dem Vertikalen Abschnitt 20 an der Kupplung 1 befestigt. Der horizontale Abschnitt 21 erstreckt sich von der Pipettenspitze 40 weg. Das Greifelement 2 überragt die Pipettenspitze 40 nach unten. Das Greifelement 2 ist im oberen, kupplungsnahen Bereich schmal ausgeführt und verbreitert sich gegen unten hin zum horizontalen Abschnitt 21, wodurch sich eine im Wesentlichen dreieckige Form des vertikalen Abschnitts 20 ergibt. Der horizontale Abschnitt 21 umfasst zwei horizontale Laschen, welche jeweils in einem seitlichen Randbereich des vertikalen Abschnitts 20 angeordnet sind, d.h. in den seitlichen Eckbereichen des Dreiecks einstückig mit dem vertikalen Abschnitt 20 ausgebildet sind. Das erste Greifelement 2 ist beispielsweise aus Metall, wie beispielsweise rostfreiem Stahl oder Aluminium oder aus Kunststoff, wie beispielsweise PEEK (Polyetheretherketon) gefertigt. Zwischen den beiden Laschen 21 ist am vertikalen Abschnitt 20 ein Dämpfungselement 22 ausgebildet, beispielsweise aus einer Schaumstoffmatte. Am oberen freien Ende der Kupplung 1 ist anschliessend an den Körper 10 eine erste Kraftscheibe 11 angeordnet, welche klemmbar zwischen dem Körper 10 und einem axialen Führungsring 12 gehalten ist. In der dargestellten Ausführungsform werden Schrauben für die Erzeugung der Klemmwirkung verwendet. Ein Durchgangskanal 100 erstreckt sich vom oberen freien Ende der Kupplung, bzw. des axialen Führungsringes 12, entlang einer Vertikalachse V über die gesamte Länge der Kupplung 1. Von oben ist ein Adapter 3 mit einer darin eingesetzten Pipettenspitze 40 entlang der Vertikalachse V in den Durchgangskanal 100 einführbar. Die erste Kraftscheibe 11 ist aus einem elastischen Material, beispielsweise aus einem elastischen Kunststoff, wie beispielsweise Gummi oder Silikon. Mit der Kraftscheibe kann der Greifer am Adapter 3 zentriert, geklemmt und ausgerichtet werden. Zusätzlich kann damit der Spalt zwischen der Kupplung 1 und dem Adapter 3 abgedichtet werden. Der Körper 10 der Kupplung 1 kann aus Metall, wie beispielsweise rostfreiem Stahl oder Aluminium gefertigt sein oder er kann aus Kunststoff, wie beispielsweise PEEK (Polyetheretherketon) gefertigt sein. Auf einer Seite des Körpers 10 der Kupplung 1, welche der Befestigungsseite des ersten Greifelements 2 gegenüberliegt, ist eine Haltevorrichtung 19 ausgebildet. Die Haltevorrichtung 19 umfasst eine Ausnehmung 190, in welcher Positionsbohrungen 191 vorgesehen sind. Dargestellt sind vier Positionsbohrungen 191, welche in einem Rechteck angeordnet sind, wobei zwei der Bohrungen in einem oberen Bereich der Ausnehmung 190 angeordnet sind und zwei in einem unteren Bereich. Von der Befestigungsseite aus ragen Magnetbohrungen 192 in den Körper 10 hinein, erstrecken sich im Wesentlichen senkrecht zu einer Oberfläche der Ausnehmung 190 und enden im Innern des Körpers 10 vor dem Erreichen der Oberfläche der Ausnehmung 190. Die Magnetbohrungen 192 sind in einer Ebene angeordnet, welche zwischen den oberen und unteren Positionsbohrungen 191 der Haltevorrichtung 19 liegt. In den Magnetbohrungen 191 sind zylinderförmige Permanentmagnete 193 angeordnet.

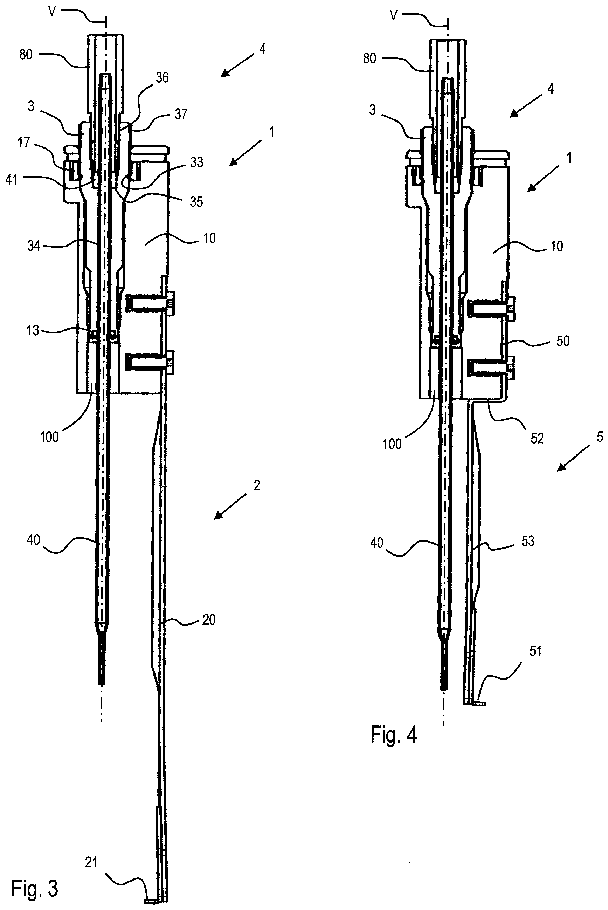

Die Figur 3 zeigt eine Schnittansicht einer weiteren Ausführungsform eines erfindungsgemässen Greifers 1,2 wobei im Durchgangskanal 100 ein Adapter 3 mit einer darin eingesetzten Pipettenspitze 40 angeordnet ist. Der Adapter 3 ist an einer rohrförmigen Z-Stange 80 angeordnet, d.h. mit dieser verschraubt. Der Adapter 3 umfasst einen Durchgangskanal 34, welcher sich entlang der Vertikalachse V vom oberen freien Ende über die gesamte Länge des Adapters 3 erstreckt. Der Durchgangskanal 34 umfasst einen ersten Abschnitt mit einem Gewinde 36 mit einem ersten Durchmesser, wobei sich der erste Abschnitt von einer oberen Stirnseite des Adapters 3 aus entlang der Vertikalachse V nach unten erstreckt. Anschliessend an den ersten Abschnitt ist ein zweiter Abschnitt mit einem kleineren Durchmesser ausgebildet. Anschliessend an den zweiten Abschnitt ist ein dritter Abschnitt mit einem kleineren Durchmesser ausgebildet, wodurch sich ein umlaufender Absatz 35 ergibt, an welchem ein umlaufender Kragen 41 der Pipettenspitze 4 angeordnet ist. Im Bereich der unteren Stirnseite des Adapters 3 ist im Durchgangskanal 34 eine erste Dichtung 13 vorgesehen. Konkret ist ein O-Ring 13 in einer umlaufenden Nut im Schaftkörper 30 des Adapters angeordnet. Der O-Ring 13 zentriert die Pipettenspitze 40 im Durchgangskanal 34 des Adapters 3 und somit im Durchgangskanal 100 der Kupplung 1.

Der Adapter 3 umfasst an seinem oberen freien Ende ein peripheres Mitnahmeprofil 37, an welchem ein Werkzeug angesetzt werden kann, um den Adapter 3 mit dem Gewinde der Z-Stange 80 zu verschrauben. Der Adapter 3 umfasst auf seiner Aussenseite eine umlaufende Nut 33 welche benachbart zum Mitnahmeprofil vorgesehen ist. Ein elastisches Kopplungselement 17 der Kupplung 1 greift im zusammengebauten Zustand in die umlaufende Nut 33 des Adapters 3, wodurch eine form- und kraftschlüssige Verbindung realisierbar ist. In dieser Ausführungsform ist ein Greifelement 2 vorgesehen, welches einen vertikalen Abschnitt 20 und einen daran anschliessenden horizontalen Abschnitt 21 umfasst, wobei der horizontale Abschnitt 21 gegen die Pipettenspitze 40 gerichtet ist. Der vertikale Abschnitt 20 erstreckt sich wesentlich über die untere Spitze der Pipettenspitze 40 hinaus. Der vertikale Abstand zwischen der Pipettenspitze 40 und dem horizontalen Abschnitt 21 ist derart bemessen, dass beim Greifen der entsprechenden Laborartikel, beispielsweise einer Mikroplatte, dieser nicht mit der Pipettenspitze 40 kollidieren kann. Ein zu greifender Laborartikel kann demnach mit einem Greifelement 2, wie es in den Figuren 2 und 3 dargestellt ist, seitlich geklemmt werden und/oder der Laborartikel kann mit diesem Greifelement 2 von unten gehalten werden.

Die Figur 4 zeigt eine Schnittansicht einer weiteren Ausführungsform eines erfindungsgemässen Greifers 1,5. In dieser Ausführungsform ist ein Greifelement 5 vorgesehen, welches einen vertikalen Abschnitt 50 umfasst, mit welchem das Greifelement 5 am Körper 10 der Kupplung 1 festgeschraubt ist. Der horizontale Abschnitt 51 ist etwas unter der Pipettenspitze 40 angeordnet und erstreckt sich von dieser weg. Anschliessend and den vertikalen Abschnitt 50 ist ein horizontaler weiterer Abschnitt 52 vorgesehen und ein an diesen anschliessenden vertikalen weiteren Abschnitt 53, welcher mit dem horizontalen Abschnitt 51 verbunden ist. Der weitere horizontale Abschnitt 52 erstreckt sich vom vertikalen Abschnitt 50 an in die Richtung der Pipettenspitze 40, endet jedoch beabstandet zu dieser. Der weitere vertikale Abschnitt 53 erstreckt sich parallel zur Pipettenspitze 40, beabstandet zu dieser. Alle Abschnitte 50,51,52,53 sind gemeinsam einstückig aus einem Blech ausgebildet.

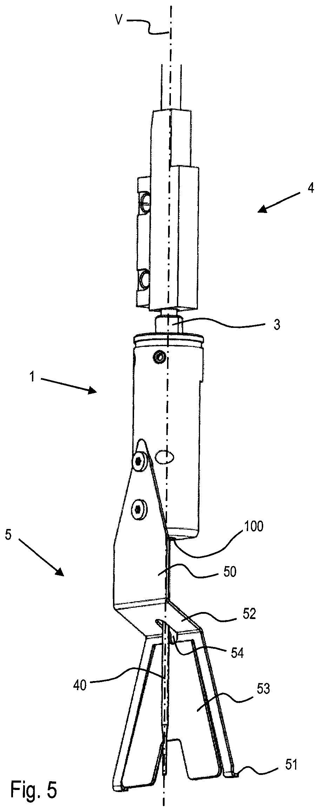

Die Figur 5 zeigt eine perspektivische Ansicht einer weiteren Ausführungsform eines erfindungsgemässen Greifers 1,5. In dieser Ausführungsform sind zwischen dem vertikalen Abschnitt 50 und dem horizontalen Abschnitt 51 des Greifelements 5, ein weiterer im Wesentlichen horizontaler Abschnitt 52 und ein weiterer im Wesentlichen vertikaler Abschnitt 53 vorgesehen. Der weitere horizontale Abschnitt 52 erstreckt sich vom vertikalen Abschnitt 50 aus in der Richtung der Pipettenspitze 40 und darüber hinaus auf die gegenüberliegende Seite der Pipettenspitze 40. Der weitere vertikale Abschnitt 53 erstreckt sich im Wesentlichen parallel zur Pipettenspitze 40 beabstandet zu dieser auf der gegenüberliegenden Seite des vertikalen Abschnittes 50. Der horizontale Abschnitt 51 erstreckt sich von der Pipettenspitze 40 weg. In den weiteren Abschnitten 52,53 ist eine gemeinsame Durchgangsöffnung 54 vorgesehen, durch welche die Pipettenspitze 40 ungehindert passieren kann.

Die Durchgangsöffnung 54 ist in der Flucht des Durchgangskanals 100 der Kupplung angeordnet. Ein zu greifender Laborartikel kann demnach mit einem Greifelement 5, wie es in den Figuren 4 und 5 dargestellt ist, seitlich geklemmt werden und/oder der Laborartikel kann mit diesem Greifelement 5 von unten gehalten werden.

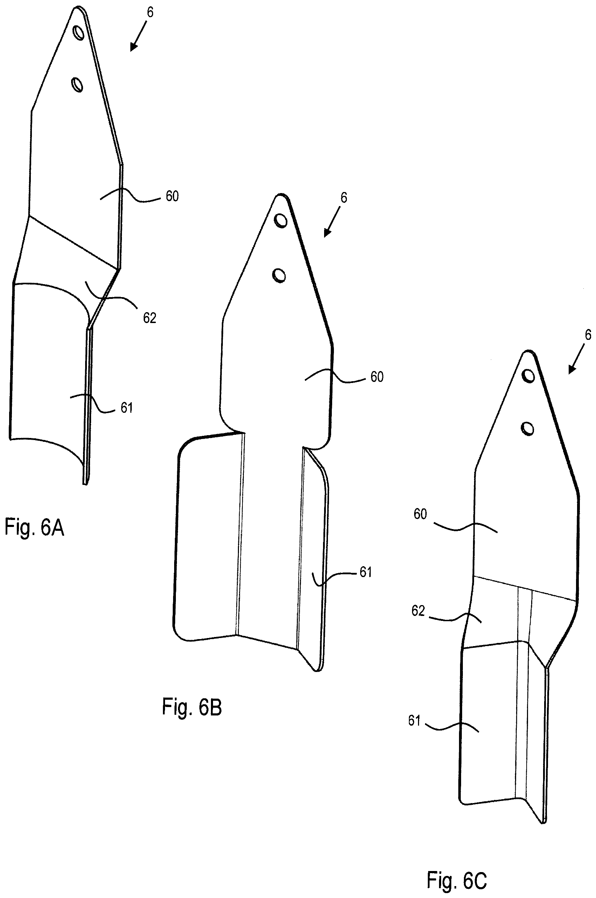

Die Figuren 6A-C zeigen perspektivische Ansichten von weiteren Ausführungsform von erfindungsgemässen Greifelementen 6. Diese Greifelemente 6 umfassen alle einen vertikalen Abschnitt 60 und einen weiteren vertikalen Abschnitt 61, wobei jeder der weiteren vertikalen Abschnitte 61 Bereiche umfasst, welche weder in der Ebene des vertikalen Abschnittes 60 liegen, noch parallel zu diesem sind. D.h. diese Bereiche liegen in vertikalen Ebenen, welche winklig zur Ebene des vertikalen Abschnitts 60 ausgerichtet sind. In der Ausführungsform der Figur 6A ist zwischen dem vertikalen Abschnitt 60 und dem weiteren vertikalen Abschnitt 61 ein weiterer winkliger Abschnitt 62 vorgesehen. Der weitere vertikale Abschnitt 61 ist gekrümmt ausgebildet. D.h. er hat die Form eines Rohrsegment-Abschnittes. In der Ausführungsform der Figur 6B umfasst der weitere vertikale Abschnitt 61 zwei Laschen, welche sich winklig vom vertikalen Abschnitt an seitlich von diesem weg erstrecken. In der Ausführungsform der Figur 6C ist zwischen dem vertikalen Abschnitt 60 und dem weiteren vertikalen Abschnitt 61 ein weiterer winklig gekrümmter Abschnitt 62 vorgesehen. Der weitere vertikale Abschnitt 61 umfasst zwei winklig aufeinander stehende Ebenen, welche miteinander verbunden sind und zusammen einen V-förmigen Querschnitt aufweisen. In allen Ausführungsformen der Figuren 6A-C sind die Abschnitte 60,61,62 gemeinsam einstückig miteinander ausgebildet. Mit solchen Greifelementen können beispielsweise rohrförmige Laborartikel, wie Probenröhrchen gegriffen werden. Obschon nicht dargestellt, können an den weiteren vertikalen Abschnitten 61 weitere horizontale Abschnitte vorgesehen werden, welche unter einen Bereich des zu greifenden Laborartikels bewegbar sind, um den Laborartikel von unten zu greifen, bzw. zu halten. Ein zu greifender Laborartikel kann demnach mit einem solchen Greifelement 6 seitlich geklemmt werden und/oder der Laborartikel kann mit diesem Greifelement 6 von unten gehalten werden.

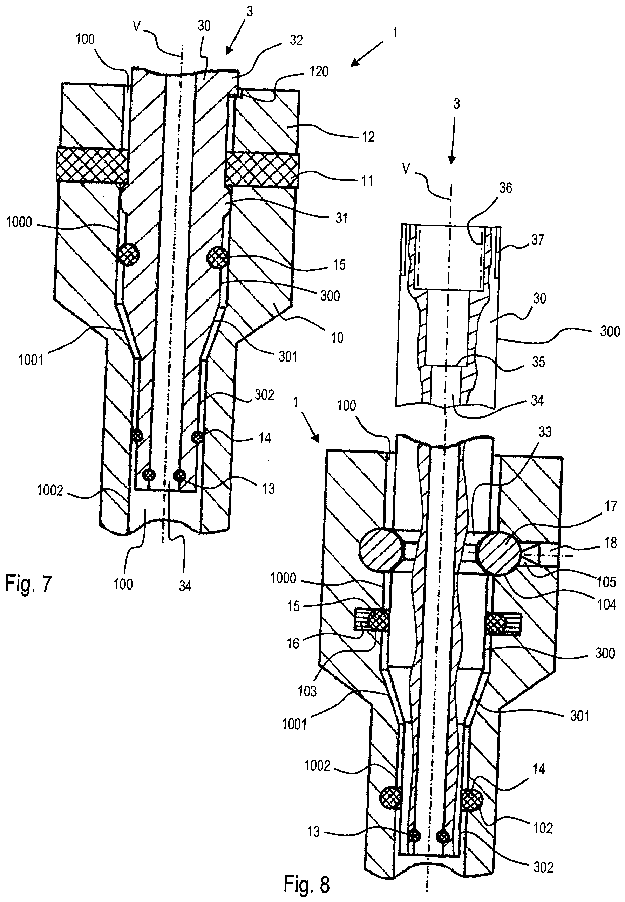

Die Figur 7 zeigt eine schematische Teilschnittansicht durch eine Ausführungsform einer Kupplung 1 und eines Adapters 3. Die Kupplung 1 erstreckt sich entlang der Vertikalachse V. Ein Schaft 30 des Adapters 3 ist zentrisch Durchgangskanal 100 der Kupplung 1 angeordnet. Der Durchgangskanal 100 und der Schaft 30 umfassen einen oberen, zylindrischen ersten Bereich 1000;300, einen an diesen unterhalb anschliessenden und nach unten konisch zusammenlaufenden zweiten Bereich 1001;301 und einen an diesen unterhalb anschliessenden zylindrischen dritten Bereich 1002;302. Zwischen den Innenwänden des Durchgangskanals 100 und den Aussenwänden des Schaftes 30 ist ein Luftspalt vorgesehen. Im dritten Bereich des Schaftes 30 ist eine umlaufende Nut vorgesehen, in welcher eine ringförmige zweite Dichtung 14 angeordnet ist. Im ersten Bereich des Schaftes 30 ist eine umlaufende Nut vorgesehen, in welcher eine ringförmige dritte Dichtung 15 angeordnet ist. Die zweite Dichtung 14 und die dritte Dichtung 15 verschliessen den Luftspalt zwischen der Kupplung 1 und dem Adapter 3. Zusätzlich ist durch sie eine Zentrierung, eine Dichtwirkung und eine Fixierung realisierbar. Der Querschnittsdurchmesser der dritten Dichtung 15 ist grösser als derjenige der zweiten Dichtung 14. Im ersten Bereich 300 des Schaftes 30 ist eine umlaufende erste Erhöhung 31 vorgesehen, welche radial über den Umfang des zylinderförmigen ersten Bereichs ragt. Die radiale Aussenkontur der ersten Erhöhung 31 ist kleiner als der Innendurchmesser des Durchgangskanals 100. Die erste Kraftscheibe 11 hat die Form einer Ringscheibe, deren Innendurchmesser im verspannten Zustand kleiner ist als der Innendurchmesser des Durchgangskanals 100. Im zusammengebauten Zustand kann die Innenseite der ersten Kraftscheibe 11 die Aussenseite des ersten Bereiches des Adapters 3 kontaktieren, woraus eine Zentrierung, Dichtung und Fixierung erzielbar ist. Die erste Kraftscheibe 11 ist im Zusammenbau anschliessend oberhalb der ersten Erhöhung 31 angeordnet und bildet ein Rückhalteelement für die Kupplung. Durch diese Ausgestaltung ist der Greifer mit einem vernünftigen Kraftaufwand vom Adapter 3 entfernbar. Im ersten Schaftbereich des Adapters 3 eine sich radial nach aussen erstreckende zweite Erhöhung 32 vorgesehen, welche im Zusammenbau in eine zweite Ausnehmung 120 der Kupplung 1 eingreifen kann, welche sich vom Durchgangskanal 100 radial nach aussen erstreckt, wodurch eine Relativrotation zwischen der Kupplung und dem Adapter verhinderbar ist.

Die Figur 8 zeigt eine schematische Teilschnittansicht durch eine weitere Ausführungsform eines Adapters 3 und einer Kupplung 1. Im Unterschied zur ersten Ausführungsform ist bei dieser Ausführungsform im dritten Bereich 1002 des Durchgangskanals 100 eine umlaufende zweite Nut 102 vorgesehen, in welcher eine ringförmige zweite Dichtung 14 angeordnet ist. Im ersten Bereich 1000 des Durchgangskanals 100 ist eine umlaufende dritte Nut 103 vorgesehen, in welcher eine dritte Dichtung 15 und eine zweite Kraftscheibe 16 angeordnet sind, wobei die Kraftscheibe 16 eine radial nach innen gerichtete Kraftkomponente auf die dritte Dichtung 15 ausüben kann. Die zweite Dichtung 14 und die dritte Dichtung 15 verschliessen den Luftspalt zwischen der Kupplung 1 und dem Adapter 3. Im ersten Bereich 1000 des Durchgangskanals 100 ist eine umlaufende vierte Nut 104 vorgesehen, in welcher ein torusförmiges Kupplungselement 17 angeordnet ist. Der Innendurchmesser des Kupplungselements 17 ragt in den Durchmesser des Durchgangskanals 100. Im ersten Bereich 300 des Schaftes 30 des Adapters 3 ist eine umlaufende Nut 33 vorgesehen, in welche das Kupplungselement 17 im zusammengebauten Zustand eingreifen kann. Durch diese Ausgestaltung ist der Greifer mit einem vernünftigen Kraftaufwand vom Adapter 3 entfernbar. Im Bereich der vierten Nut 104 ist im Körper 10 der Kupplung 1 eine sich nach aussen erstreckende radiale Bohrung 105 vorgesehen, in welcher ein Drücker 18 angeordnet ist. Mit dem Drücker 18 kann eine radial nach innen gerichtet Kraft auf das Kupplungselement 17 ausgeübt werden, wodurch die Klemmkraft des Kupplungselements 17 einstellbar ist.

Selbstverständlich lassen sich die Elemente der ersten Ausführungsform mit denjenigen der zweiten Ausführungsform kombinieren. Alle sich daraus ergebenden Ausführungsformen können zusammen mit den unterschiedlichen Ausführungen der Greifelemente verwendet werden.

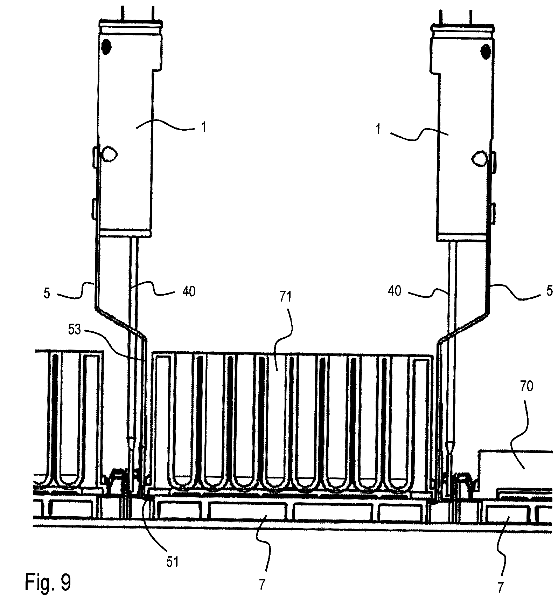

Die Figur 9 zeigt eine Seitenansicht eines erfindungsgemässen Pipettier-Systems mit zwei Greifern, welche an zwei sich gegenüberliegenden Seiten einer Deep-Well-Platte 71 angeordnet sind. In der dargestellten Ausführungsform sind Mikroplatten 70 und Deep-Well-Platten 71 auf Plattenhalterungen 7 derart angeordnet, dass möglichst viele Platten 70,71 auf dem zur Verfügung stehenden Platz angeordnet werden können. Dementsprechend ist der Abstand zwischen zwei benachbarten Platten 70,71 möglichst klein zu halten. Folglich ist der Abstand zwischen der Pipettenspitze 40 und dem Aufnahmeort der Platten am Greifelement 5 möglichst klein zu halten. Der Abstand zwischen der Pipettenspitze 40 und dem Greifelement 5 kann beispielsweise 0,5 bis 10 Millimeter, 1 bis 8 Millimeter oder 2 bis 5 Millimeter betragen. Dargestellt ist eine Deep-Well-Platte 71 welche durch zwei in der Figur 5 dargestellte Greifer von zwei sich gegenüberliegenden Seiten gegriffen wird. Hierfür werden die horizontalen Abschnitte 51 des jeweiligen Greifelements 5 von der Seite unter die Deep-Well-Platte 71 verfahren. Die an den horizontalen Abschnitt 51 anschliessende vertikale Abschnitt 53 kann seitlich an der Platte 71 andrücken, kann druckfrei an ihr anliegen oder kann beabstandet zu ihr angeordnet sein.

### BEZUGSZEICHENLISTE

| | | | |
|---|---|---|---|
| 1 | Kupplung | 191 | Positionsbohrung |
| 10 | Körper | 192 | Magnetbohrung |
| 100 | Durchgangskanal | 193 | Magnet |
| 1000 | erster Abschnitt | 2 | erstes Greifelement |
| 1001 | zweiter Abschnitt | 20 | vertikaler Abschnitt |
| 1002 | dritter Abschnitt | 21 | horizontaler Abschnitt |
| 101 | erste Nut | | |
| 102 | zweite Nut | 22 | Dämpfungselement |
| 103 | dritte Nut | 3 | Adapter |
| 104 | vierte Nut | 30 | Schaft |
| 105 | radiale Bohrung | 300 | erster Abschnitt |
| 11 | erste Kraftscheibe | 301 | zweiter Abschnitt |
| 12 | axialer Führungsring | 302 | dritter Abschnitt |
| 120 | zweite Ausnehmung | 31 | erste Erhöhung |
| 13 | erste Dichtung | 32 | zweite Erhöhung |
| 14 | zweite Dichtung | 33 | Nut |
| 15 | dritte Dichtung | 34 | Durchgangskanal |
| 16 | zweite Kraftscheibe | 35 | Absatz |
| 17 | Kupplungselement | 36 | Gewinde |
| 18 | Drücker | 37 | Mitnahmeprofil |
| 19 | Haltevorrichtung | | |
| 190 | Ausnehmung | | |
| 4 | Pipettenspitzen-Aufnahme | 7 | Plattenhalterung |
| | | 70 | Mikroplatte |
| 40 | Pipettenspitze | 71 | Deep-Well-Platte |
| 41 | Kragen | 8 | Manipulator |
| 5 | zweites Greifelement | 80 | Z-Stange |
| 50 | vertikaler Abschnitt | 9 | Arbeitstisch |
| 51 | horizontaler Abschnitt | 90 | Halter |
| | | 91 | Stift |
| 52 | weiterer Abschnitt | | |
| 53 | weiterer Abschnitt | V | Vertikalachse |
| 54 | Durchgangsöffnung | X | erste Horizontalachse |
| 6 | drittes Greifelement | Y | zweite Horizontalachse |
| 60 | vertikaler Abschnitt | | |
| 61 | vertikaler Abschnitt | Z | Vertikalachse |
| 62 | weiterer Abschnitt | | |

## Patentansprüche

1. Ein Pipettier-System umfassend:
- mindestens eine Pipettenspitzen-Aufnahme (4) mit einer darin angeordneten Pipettenspitze (40), welche sich entlang einer Vertikalachse (V) erstreckt,
- mindestens einen Greifer (1,2;5;6) umfassend:
- eine mechanische Kupplung (1) mit einem Körper (10), welche sich entlang der Vertikalachse (V) erstreckt, wobei der Greifer mit der Kupplung (1) an die mindestens eine Pipettenspitzen-Aufnahme (4) angeschlossen ist, und
- mindestens ein Greifelement (2;5;6), welches seitlich am Körper (10) der Kupplung (1) angeordnet ist und sich von der Kupplung (1) aus vertikal nach unten erstreckt und mindestens einen im Wesentlichen vertikalen Abschnitt (20;50;60) umfasst,
wobei, die Kupplung (1) im Körper (10) einen Durchgangskanal (100) umfasst, welcher sich entlang der Vertikalachse (V) über die gesamte Länge der Kupplung (1) erstreckt und wobei sich die Pipettenspitze (40) zumindest teilweise entlang des Durchgangskanals (100) der Kupplung (1) erstreckt.

2. Das Pipettier-System gemäss Anspruch 1, wobei am oberen freien Ende der Kupplung (1) eine erste Kraftscheibe (11) zwischen dem Körper (10) und einem axialen Führungsring (12) klemmbar angeordnet ist, wobei die innere Kontur der ersten Kraftscheibe (11) im geklemmten Zustand in das Innere der Kontur des Durchgangskanals (100) ragt.

3. Das Pipettier-System gemäss Anspruch 1 oder 2, wobei die Pipettenspitzen-Aufnahme (4) einen Adapter (3) mit einem Durchgangskanal (34) umfasst, welcher sich entlang der Vertikalachse (V) über die gesamte Länge des Adapters (3) erstreckt, wobei sich die Pipettenspitze (40) zumindest teilweise entlang des Durchgangskanals (34) des Adapters (3) erstreckt.

4. Das Pipettier-System gemäss Anspruch 3, wobei der Durchgangskanal (34) des Adapters (3) einen ersten Abschnitt mit einem Gewinde (36) mit einem ersten Durchmesser umfasst, wobei sich der erste Abschnitt von einer oberen Stirnseite des Adapters (3) aus entlang der Vertikalachse (V) nach unten erstreckt, einen an den ersten Abschnitt anschliessenden zweiten Abschnitt mit einem zweiten Durchmesser umfasst, wobei der zweite Durchmesser kleiner als der erste Durchmesser ausgebildet ist, und einen an den zweiten Abschnitt anschliessenden dritten Abschnitt mit einem dritten Durchmesser umfasst, wobei der dritte Durchmesser kleiner als der zweite Durchmesser ist, wodurch sich ein umlaufender Absatz (35) ergibt, an welchem die Pipettenspitze (4) angeordnet ist.

5. Das Pipettier-System gemäss Anspruch 3 oder 4, wobei der Adapter (3) einen Schaft (30) mit einem zylindrischen ersten Abschnitt (300), einem konischen zweiten Abschnitt (301) und einem zylindrischen dritten Abschnitt (302) umfasst.

6. Das Pipettier-System gemäss Anspruch 5, wobei im ersten Abschnitt (300) des Adapters (3) eine umlaufende erste Erhöhung (31) vorgesehen ist, deren äussere Kontur nach aussen über die Kontur des ersten Abschnitts (300) ragt, wobei die äussere Kontur der ersten Erhöhung (31) innerhalb der Kontur des Durchgangskanals (100) der Kupplung (1) liegt.

7. Das Pipettier-System gemäss Anspruch 5 oder 6, wobei im ersten Abschnitt (300) des Adapters (3) eine sich radial nach aussen erstreckende zweite Erhöhung (32) vorgesehen ist, wobei am oberen freien Ende der Kupplung (1) mindestens eine zweite Ausnehmung (120) vorgesehen ist, welche sich vom Durchgangskanal (100) radial nach aussen erstreckt und wobei die zweite Erhöhung (32) des Adapters (3) in der zweiten Ausnehmung (120) der Kupplung (1) aufnehmbar ist, wodurch eine relative Verdrehung des Greifers (1,2;5) bezüglich des Adapters (3) verhinderbar ist.

8. Das Pipettier-System gemäss einem der Ansprüche 5 bis 7, wobei im Durchgangskanal (34) des Adapters (3) im Bereich des unteren freien Endes des Adapters (3) eine erste Dichtung (13) vorgesehen ist, welche einen direkten Kontakt der Pipettenspitze (40) mit dem Durchgangskanal (34) des Adapters (3) verhindert.

9. Das Pipettier-System gemäss einem der Ansprüche 5 bis 8, wobei im ersten Abschnitt (300) des Adapters (3) auf seiner Aussenseite eine umlaufende Nut (33) vorgesehen ist, wobei in einem ersten Abschnitt (1000) des Durchgangskanals (100) eine umlaufende vierte Nut (104) vorgesehen ist, und wobei ein ringförmiges, elastisches Kupplungselement (17) vorgesehen ist, welches in beide Nuten (33;104) eingreift.

10. Das Pipettier-System gemäss Anspruch 9, wobei in der Kupplung (1) mindestens eine radiale Bohrung (105) vorgesehen ist, welche sich von der vierten Nut (104) radial nach aussen erstreckt und in welcher ein Drücker (18) angeordnet ist, mit welchem eine radial nach innen gerichtete Kraft auf das Kupplungselement (17) ausübbar ist.

11. Das Pipettier-System gemäss einem der Ansprüche 1 bis 10, wobei das mindestens eine Greifelement (2;5) mindestens einen im Wesentlichen horizontalen Abschnitt (21;51) umfasst.

12. Das Pipettier-System gemäss Anspruch 11, wobei sich der im Wesentlichen horizontale Abschnitt (21;51) des Greifelements (2;5) von der Pipettenspitze (40) weg erstreckt.

13. Das Pipettier-System gemäss einem der Ansprüche 1 bis 10, wobei das mindestens eine Greifelement (6) mindestens einen weiteren im Wesentlichen vertikalen Abschnitt (61) umfasst.

14. Das Pipettier-System gemäss einem der Ansprüche 11 bis 13, wobei das mindestens eine Greifelement (5;6) weitere Abschnitte (52,53;62) umfasst, welche zwischen dem vertikalen Abschnitt (50) und dem horizontalen Abschnitt (51) oder welche zwischen dem vertikalen Abschnitt (60) und dem weiteren vertikalen Abschnitt (61) angeordnet sind.

15. Das Pipettier-System gemäss einem der Ansprüche 11 bis 14, wobei mindestens einer der weiteren Abschnitte (52,53) eine Durchgangsöffnung (54) umfasst, welche in der Verlängerung des Durchgangskanals (100) angeordnet ist.

16. Das Pipettier-System gemäss Anspruch 15, wobei zwei, mehr oder alle Abschnitte (52,53) eine separate Durchgangsöffnung (54) umfassen oder wobei zwei, mehr oder alle Abschnitte (52,53) eine gemeinsame Durchgangsöffnung (54) umfassen.

17. Das Pipettier-System gemäss einem der Ansprüche 1 bis 16, wobei das Pipettier-System weiter einen Manipulator (8) umfasst, mit welchem die mindestens eine Pipettenspitzen-Aufnahme (4) entlang einer ersten Horizontalachse (X), entlang einer zur ersten Horizontalachse (X) senkrechten zweiten Horizontalachse (Y) und entlang einer zu den beiden Horizontalachsen (X;Y) senkrechten Vertikalachse (Z) verfahrbar ist.

18. Das Pipettier-System gemäss einem der Ansprüche 1 bis 17, wobei das Pipettier-System weiter mindestens einen Halter (90) für mindestens einen Greifer (1,2;5) umfasst.

19. Ein Verfahren zur Verwendung eines Greifers in einem Pipettier-System gemäss einem der vorangehenden Ansprüche, umfassend die Schritte:
- Bereitstellen mindestens einer Pipettenspitzen-Aufnahme (4) mit einer darin angeordneten Pipettenspitze (40);
- Bereitstellen mindestens eines Greifers (1,2;5;6) umfassend:
- eine mechanische Kupplung (1), welche einen Körper (10) mit einem Durchgangskanal (100) umfasst, welcher sich entlang der Vertikalachse (V) über die gesamte Länge der Kupplung (1) erstreckt, und
- ein Greifelement (2;5;6), welches seitlich am Körper (10) der Kupplung (1) angeordnet ist und sich von der Kupplung (1) aus vertikal nach unten erstreckt und mindestens einen im Wesentlichen vertikalen Abschnitt (20;50;60) umfasst;
- Anordnen der Pipettenspitzen-Aufnahme (4) über dem Greifer (1,2;5;6);
- Absenken der Pipettenspitzen-Aufnahme (4), wodurch die Pipettenspitze (40) zumindest teilweise in den Durchgangskanal (100) eingeführt wird; und
- Herstellen einer Verbindung zwischen der Pipettenspitzen-Aufnahme (4) und dem Greifer (1,2;5;6) .

## Claims

1. A pipetting system comprising:
- at least one pipette tip receptacle (4) having a pipette tip (40) arranged therein, which pipette tip (40) extending along a vertical axis (V),
- at least one gripper (1,2;5;6) comprising:
- a mechanical coupling (1) having a body (10) extending along the vertical axis (V), the gripper with the coupling (1) being connected to the at least one pipette tip receptacle (4), and
- at least one gripping element (2;5;6) arranged laterally on the body (10) of the coupling (1) and extending vertically downwardly from the coupling (1) and comprising at least one substantially vertical portion (20;50;60),
wherein the coupling (1) comprises in the body (10) a through channel (100) extending along the vertical axis (V) over the entire length of the coupling (1) and wherein the pipette tip (40) extends at least partially along the through channel (100) of the coupling (1).

2. The pipetting system according to claim 1, wherein at the upper free end of the coupling (1) a first force washer (11) is clampably arranged between the body (10) and an axial guide ring (12), wherein the inner contour of the first force washer (11) in the clamped state projects into the interior of the contour of the passage channel (100).

3. The pipetting system according to claim 1 or 2, wherein the pipette tip receptacle (4) comprises an adapter (3) having a through channel (34) extending along the vertical axis (V) over the entire length of the adapter (3), wherein the pipette tip (40) extends at least partially along the through channel (34) of the adapter (3) .

4. The pipetting system according to claim 3, wherein the through channel (34) of the adapter (3) comprises a first portion having a thread (36) with a first diameter, the first portion extending downwardly from an upper face of the adapter (3) along the vertical axis (V), a second portion having a second diameter adjoining the first portion, the second diameter being smaller than the first diameter, and a third portion having a third diameter and adjoining the second portion, the third diameter being smaller than the second diameter, thereby providing a circumferential shoulder (35) on which the pipette tip (4) is disposed.

5. The pipetting system according to claim 3 or 4, wherein the adapter (3) comprises a shaft (30) having a cylindrical first portion (300), a conical second portion (301), and a cylindrical third portion (302).

6. The pipetting system according to claim 5, wherein a circumferential first elevation (31) is provided in the first section (300) of the adapter (3), the outer contour of which projects outwardly beyond the contour of the first section (300), wherein the outer contour of the first elevation (31) lies within the contour of the through channel (100) of the coupling (1).

7. The pipetting system according to claim 5 or 6, wherein in the first portion (300) of the adapter (3) a radially outwardly extending second elevation (32) is provided, wherein at least one second recess (120) is provided at the upper free end of the coupling (1), which recess (120) extends radially outwardly from the passage channel (100), and wherein the second elevation (32) of the adapter (3) is receivable in the second recess (120) of the coupling (1), whereby a relative rotation of the gripper (1,2; 5) with respect to the adapter (3) is preventable.

8. The pipetting system according to any one of claims 5 to 7, wherein a first seal (13) is provided in the through channel (34) of the adapter (3) in the region of the lower free end of the adapter (3), which seal prevents direct contact of the pipette tip (40) with the through channel (34) of the adapter (3).

9. The pipetting system according to any one of claims 5 to 8, wherein a circumferential groove (33) is provided in the first portion (300) of the adapter (3) on its outer side, wherein a circumferential fourth groove (104) is provided in a first portion (1000) of the through channel (100), and wherein an annular elastic coupling element (17) is provided which engages in both grooves (33;104).

10. The pipetting system according to claim 9, wherein at least one radial bore (105) is provided in the coupling (1), which extends radially outwardly from the fourth groove (104) and in which a pusher (18) is arranged, with which a radially inwardly directed force can be exerted on the coupling element (17).

11. The pipetting system according to any one of claims 1 to 10, wherein the at least one gripping element (2;5) comprises at least one substantially horizontal portion (21;51) .

12. The pipetting system according to claim 11, wherein the substantially horizontal portion (21;51) of the gripping element (2;5) extends away from the pipette tip (40) .

13. The pipetting system according to any one of claims 1 to 10, wherein the at least one gripping element (6) comprises at least one further substantially vertical portion (61).

14. The pipetting system according to any one of claims 11 to 13, wherein the at least one gripping element (5;6) comprises further sections (52,53;62) which are arranged between the vertical section (50) and the horizontal section (51) or which are arranged between the vertical section (60) and the further vertical section (61).

15. The pipetting system according to any one of claims 11 to 14, wherein at least one of the further sections (52,53) comprises a passage opening (54) arranged in the extension of the passage channel (100).

16. The pipetting system according to claim 15, wherein two, more or all of the sections (52,53) comprise a separate passageway opening (54) or wherein two, more or all of the sections (52,53) comprise a common passageway opening (54).

17. The pipetting system according to any one of claims 1 to 16, wherein the pipetting system further comprises a manipulator (8) with which the at least one pipette tip receptacle (4) is movable along a first horizontal axis (X), along a second horizontal axis (Y) perpendicular to the first horizontal axis (X), and along a vertical axis (Z) perpendicular to the two horizontal axes (X;Y).

18. The pipetting system according to any one of claims 1 to 17, wherein the pipetting system further comprises at least one holder (90) for at least one gripper (1,2;5).

19. A method of using a gripper in a pipetting system according to any one of the preceding claims, comprising the steps of:
- Providing at least one pipette tip receptacle (4) having a pipette tip (40) disposed therein;
- Providing at least one gripper (1,2;5;6) comprising:
- a mechanical coupling (1) comprising a body (10) with a through channel (100) extending along the vertical axis (V) over the entire length of the coupling (1), and
- a gripping member (2;5;6) arranged laterally on the body (10) of the coupling (1) and extending vertically downwardly from the coupling (1) and comprising at least one substantially vertical portion (20;50;60);
- Arranging the pipette tip receptacle (4) above the gripper (1,2;5;6);
- Lowering the pipette tip receptacle (4), whereby the pipette tip (40) is at least partially inserted into the passageway (100); and
- Establishing a connection between the pipette tip receptacle (4) and the gripper (1,2;5;6).

## Revendications

1. Un système de pipetage comprenant:
- au moins un logement de pointe de pipette (4) avec une pointe de pipette (40) disposée dans celui-ci, qui s'étend le long d'un axe vertical (V),
- au moins un préhenseur (1,2;5;6) comprenant:
- un accouplement mécanique (1) avec un corps (10) qui s'étend le long de l'axe vertical (V), le préhenseur avec l'accouplement (1) étant raccordé à l'au moins un logement de pointe de pipette (4), et
- au moins un élément de préhension (2;5;6) qui est disposé latéralement sur le corps (10) de l'accouplement (1) et s'étend verticalement vers le bas à partir de l'accouplement (1) et comprend au moins une section sensiblement verticale (20;50;60),
dans lequel l'accouplement (1) comprend dans le corps (10) un canal de passage (100) qui s'étend le long de l'axe vertical (V) sur toute la longueur de l'accouplement (1) et dans lequel la pointe de pipette (40) s'étend au moins partiellement le long du canal de passage (100) de l'accouplement (1).

2. Le système de pipetage selon la revendication 1, dans lequel à l'extrémité libre supérieure de l'accouplement (1), un premier disque de force (11) est disposé de manière à pouvoir être serré entre le corps (10) et une bague de guidage axiale (12), le contour intérieur du premier disque de force (11) faisant saillie à l'état serré à l'intérieur du contour du canal de passage (100).

3. Le système de pipetage selon la revendication 1 ou 2, dans lequel le logement de pointe de pipette (4) comprend un adaptateur (3) avec un canal de passage (34) qui s'étend le long de l'axe vertical (V) sur toute la longueur de l'adaptateur (3), la pointe de pipette (40) s'étendant au moins partiellement le long du canal de passage (34) de l'adaptateur (3).

4. Le système de pipetage selon la revendication 3, dans lequel le canal de passage (34) de l'adaptateur (3) comprend une première section avec un filetage (36) d'un premier diamètre, la première section s'étendant vers le bas à partir d'une face frontale supérieure de l'adaptateur (3) le long de l'axe vertical (V), comprend une deuxième section se raccordant à la première section et ayant un deuxième diamètre, le deuxième diamètre étant plus petit que le premier diamètre, et une troisième section faisant suite à la deuxième section et ayant un troisième diamètre, le troisième diamètre étant plus petit que le deuxième diamètre, ce qui donne un épaulement périphérique (35) sur lequel est disposée la pointe de pipette (4).

5. Le système de pipetage selon la revendication 3 ou 4, dans lequel l'adaptateur (3) comprend une tige (30) avec une première section cylindrique (300), une deuxième section conique (301) et une troisième section cylindrique (302) .

6. Le système de pipetage selon la revendication 5, dans lequel il est prévu dans la première section (300) de l'adaptateur (3) une première surélévation périphérique (31) dont le contour extérieur fait saillie vers l'extérieur au-delà du contour de la première section (300), le contour extérieur de la première surélévation (31) étant situé à l'intérieur du contour du canal de passage (100) de l'accouplement (1).

7. Le système de pipetage selon la revendication 5 ou 6, dans lequel une deuxième surélévation (32) s'étendant radialement vers l'extérieur est prévue dans la première section (300) de l'adaptateur (3), dans lequel au moins un deuxième évidement (120) est prévu à l'extrémité libre supérieure de l'accouplement (1), lequel s'étend radialement vers l'extérieur depuis le canal de passage (100) et dans lequel la deuxième surélévation (32) de l'adaptateur (3) peut être reçue dans le deuxième évidement (120) de l'accouplement (1), ce qui permet d'éviter une rotation relative du préhenseur (1,2;5) par rapport à l'adaptateur (3) peut être empêchée.

8. Le système de pipetage selon l'une des revendications 5 à 7, dans lequel il est prévu dans le canal de passage (34) de l'adaptateur (3), au niveau de l'extrémité libre inférieure de l'adaptateur (3), un premier joint d'étanchéité (13) qui empêche un contact direct de l'embout de pipette (40) avec le canal de passage (34) de l'adaptateur (3).

9. Le système de pipetage selon l'une des revendications 5 à 8, dans lequel une rainure périphérique (33) est prévue dans la première section (300) de l'adaptateur (3) sur son côté extérieur, dans lequel une quatrième rainure périphérique (104) est prévue dans une première section (1000) du canal de passage (100), et dans lequel un élément d'accouplement élastique annulaire (17) est prévu, lequel s'engage dans les deux rainures (33;104).

10. Le système de pipetage selon la revendication 9, dans lequel il est prévu dans l'accouplement (1) au moins un alésage radial (105) qui s'étend radialement vers l'extérieur depuis la quatrième rainure (104) et dans lequel est disposé un poussoir (18) avec lequel une force dirigée radialement vers l'intérieur peut être exercée sur l'élément d'accouplement (17).

11. Le système de pipetage selon l'une quelconque des revendications 1 à 10, dans lequel ledit au moins un élément de préhension (2;5) comprend au moins une section sensiblement horizontale (21;51).

12. Le système de pipetage selon la revendication 11, dans lequel la section sensiblement horizontale (21;51) de l'élément de préhension (2;5) s'étend en s'éloignant de la pointe de la pipette (40).

13. Le système de pipetage selon l'une quelconque des revendications 1 à 10, dans lequel ledit au moins un élément de préhension (6) comprend au moins une autre section sensiblement verticale (61).

14. Le système de pipetage selon l'une des revendications 11 à 13, dans lequel le au moins un élément de préhension (5;6) comprend d'autres sections (52,53;62) qui sont disposées entre la section verticale (50) et la section horizontale (51) ou qui sont disposées entre la section verticale (60) et l'autre section verticale (61).

15. Le système de pipetage selon l'une des revendications 11 à 14, dans lequel au moins l'une des autres sections (52,53) comprend un orifice de passage (54) situé dans le prolongement du canal de passage (100).

16. Le système de pipetage selon la revendication 15, dans lequel deux, plusieurs ou toutes les sections (52,53) comprennent une ouverture de passage séparée (54) ou dans lequel deux, plusieurs ou toutes les sections (52,53) comprennent une ouverture de passage commune (54).

17. Le système de pipetage selon l'une des revendications 1 à 16, dans lequel le système de pipetage comprend en outre un manipulateur (8) avec lequel le au moins un logement de pointe de pipette (4) peut être déplacé le long d'un premier axe horizontal (X), le long d'un deuxième axe horizontal (Y) perpendiculaire au premier axe horizontal (X) et le long d'un axe vertical (Z) perpendiculaire aux deux axes horizontaux (X;Y).

18. Le système de pipetage selon l'une des revendications 1 à 17, dans lequel le système de pipetage comprend en outre au moins un support (90) pour au moins un préhenseur (1,2;5) .

19. Procédé d'utilisation d'un préhenseur dans un système de pipetage selon l'une quelconque des revendications précédentes, comprenant les étapes consistant à:
- Fournir au moins un réceptacle d'embout de pipette (4) avec un embout de pipette (40) disposé à l'intérieur;
- Mise à disposition d'au moins un préhenseur (1,2;5;6) comprenant:
- un accouplement mécanique (1) qui comprend un corps (10) avec un canal de passage (100) qui s'étend le long de l'axe vertical (V) sur toute la longueur de l'accouplement (1), et
- un élément de préhension (2;5;6) qui est disposé latéralement sur le corps (10) du raccord (1) et s'étend verticalement vers le bas à partir du raccord (1) et comprend au moins une section sensiblement verticale (20;50;60);
- Disposer le réceptacle de pointe de pipette (4) au-dessus du préhenseur (1,2;5;6);
- Abaisser le réceptacle de pointe de pipette (4), ce qui permet d'introduire au moins partiellement la pointe de pipette (40) dans le canal de passage (100); et
- Réaliser une liaison entre le logement de pointe de pipette (4) et le préhenseur (1,2;5;6).
